# EUROPEAN PATENT APPLICATION

(11) **EP 1 748 650 A2**
(43) Date of publication of application: **31.01.2007**
(21) Application number: 06252450.9
(22) Date of filing: 09.05.2006
(51) Int. Cl.: H04N 5/445, H04N 5/91

(54) **Method of reproducing transport stream in television receiver and television receiver using the same**

(30) Priority: 15.07.2005 KR 20050064019
(71) Applicant: LG Electronics Inc., Yongdungpo-gu Seoul (KR)
(72) Inventor: Cha, Youn Jine, Gyeongsangbuk-do, (KR)
(74) Representative: Camp, Ronald

(57) **Abstract**

A transport stream reproducing method and a television receiver using the same enable reproduction of a transport stream from a previous reproduction stop point. The television receiver includes a personal video recorder for storing at least one previous reproduction section of the transport stream constructed of a plurality of transport packets and for selectively reproducing the stored transport stream; a flag setting unit for setting a flag in one of the plurality of transport packets, the set flag containing information indicating a stop point of a previous reproduction section of the stored transport stream; and a system controller for controlling the personal video recorder to reproduce the transport stream according to the flag information.

## Description

The present invention relates to digital television receivers. It more particularly relates to a method of reproducing a transport stream in a television receiver and a television receiver using the same.

A television receiver may incorporate, internally or externally, a digital video recorder known as a personal video recorder or PVR, which enables high-definition (e.g., DVD quality) recording and reproduction of broadcast signals using a data storage medium such as a hard disc. A personal video recorder is generally further provided with a central processing unit for executing reproduction functions, an operating system, a memory (ROM) integrated with a reproduction software chip, and a large-scale hard disc, and by connecting to a telephone line, may receive on demand an updated broadcast schedule to enable preprogrammed recording. Accordingly, using a function similar to that of a computer hard disc, numerous broadcast programs may be consecutively or simultaneously recorded for playback as desired by a user, at any time and in any sequence, regardless of a broadcaster's scheduling. Thus, a personal video recorder is similar to a conventional videocassette recorder, in that a program may be transferred from a broadcasting station to be stored for later playback, but provides greater flexibility and user convenience since recording is performed without videotape, so that an instance of reproduction may be executed with high selectivity, such as by skipping portions (e.g., commercials) of a program or a stream of programs.

Accordingly, a digital television receiver is capable of storing various broadcast programs and has a storage function enabling a user to repeatedly select and view a specific program as desired. For example, for a digital broadcast program configured in a transport packet format of a plurality of transport packets, each formed of a header and a payload, the stored transport stream may be provided directly to a personal video recorder, enabling selective playback and even editing. In the event that an analog broadcast program is received, an analog-to-digital conversion is first performed to enable storage by encoding the received broadcast signal into a transport stream, which can then be stored in the same manner as a digital broadcast program. In addition to broadcast signals, the digital television receiver also provides functions of storing, editing, and reproducing video signals as received from a digital camcorder, a DVD player, or other peripheral device connected to the digital television receiver. Here, the peripheral device may be a digital storage medium of the personal video recorder or an auxiliary storage medium.

At the time of storing a received transport stream, a menu is displayed on a screen of the television receiver to enable the user to decide whether a specific program or data stream is to be added to the same file of another program, i.e., a previously stored program or data stream as stored in the storage medium, or whether a new program file is to be created. In doing so, the received transport stream may be added to another file using a displayed program list, which is stored in the storage medium, or may be stored using a new file name and a separate index file generated for the purpose. In any event, a data stream is stored in the storage medium along with the appropriate index file, which is used to assign addresses correspondingly. The user can reproduce a video stream corresponding to a specific program from the storage medium with reference to the index files. Subsequently, for example, at the time of reproduction of a specific transport stream selected from a PVR storage medium, the index files are referenced.

In reproducing a transport stream using a digital television receiver as described above, the data stream is reproduced from an initial transport packet constructing the transport stream. A user may, however, wish to perform a subsequent instance of viewing a specific stream from a point of terminating an earlier instance of viewing the stream. To do so, the user is inconvenienced by the need to search the stored stream through a series of cumbersome and undesired playback operations, which must be repeatedly preformed for each such instance of secondary viewing.

The present invention seeks to provide an improved television receiver and method of operating the same.

Embodiments of the invention can provide a method of reproducing a transport stream in a television receiver and a television receiver using the same, which enables a transport stream to be reproduced from a previous reproduction stop point, when a user selects the transport stream for reproduction.

Embodiments of the invention can provide a method of reproducing a transport stream in a television receiver and a television receiver using the same, by which information corresponding to at least one previous reproduction section is provided to a user as a transport stream is reproduced, enabling a selection of a user-specific reproduction point.

Additional advantages and features of the invention will be set forth in part in the description which follows and in part will become apparent to those having ordinary skill in the art upon examination of the following or may be learned from practice of the invention.

In accordance with a first aspect of the invention, a flag representing a reproduction stop point is set in a packet corresponding to the reproduction stop point among transport packets configuring a stored broadcast signal or data stream. Information of each reproduction section of the stored stream includes a reproduction start point and a reproduction stop point and is stored as a timetable format in a storage medium. Also, a reproduction count and at least one previous reproduction section of a stream selected form storage are displayed as a progress bar overlaying a display screen, using input and output information of the stored stream, enabling a user selection of a specific point of reproduction through the displayed previous reproduction section.

According to another aspect of the present invention, there is provided a television receiver comprising a personal video recorder arranged to store at least one previous reproduction section of the transport stream constructed of a plurality of transport packets and to selectively reproduce the stored transport stream; a flag setting unit arranged to set a flag in one of the plurality of transport packets, the set flag containing information indicating a stop point of a previous reproduction section of the stored transport stream; and a system controller arranged to control the personal video recorder to reproduce the transport stream according to the flag information.

According to another aspect of the present invention, there is provided a method of reproducing a transport stream in a television receiver including a personal video recorder. The method comprises determining, in response to a user selection of a reproduction of a transport stream constructed of a plurality of packets stored by the personal video recorder, whether a flag containing information indicating a stop point of a previous reproduction section of the stored transport stream is present in one of the plurality of transport packets; reproducing the transport stream according to the presence of the flag; and displaying a progress bar indicating the previous reproduction section and a current reproduction position while the transport stream is reproduced.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG. 1 is a block diagram of a digital television receiver according to the present invention;

FIG. 2 is a diagram of a transport stream constructed of a plurality of transport packets;

FIG. 3 is a diagram of an exemplary screen displaying a progress bar indicating a reproduction count and a previous reproduction section of a stored transport stream;

FIG. 4 is a flowchart of a method of reproducing a stored transport stream according to the present invention.

Wherever possible, like reference designations will be used throughout the drawings to refer to the same or similar parts.

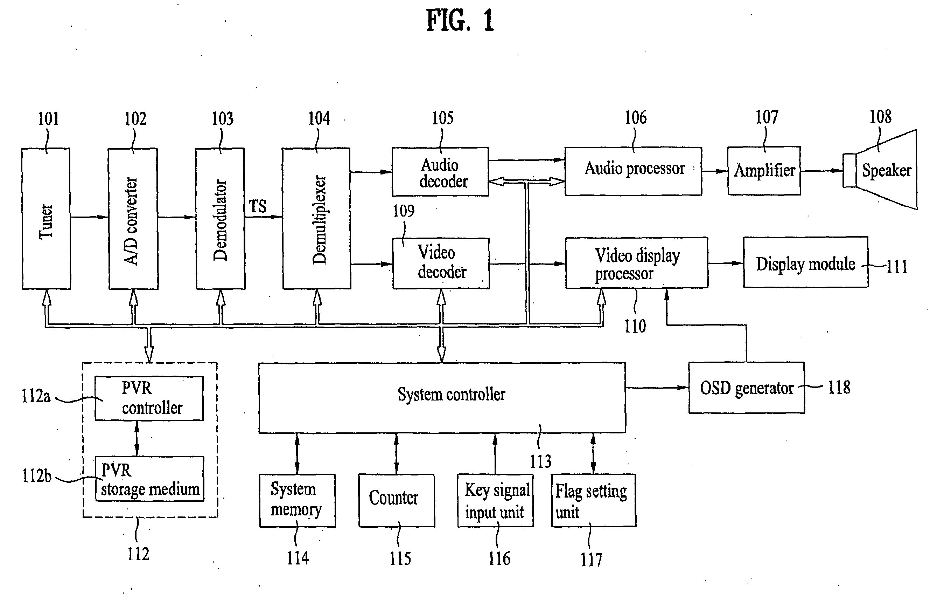

Referring to FIG. 1, a digital television receiver includes a tuner 101 for tuning a specific channel among broadcast channels having prescribed frequency bands differently assigned to broadcasting stations; an analog-to-digital (A/D) converter 102 for converting analog signals into digital signals; a demodulator 103 for demodulating the received broadcast signal and outputting a transport stream (TS) corresponding to the broadcast signal; a demultiplexer 104 for separating the demodulated broadcast signal into an audio signal and a video signal; an audio decoder 105 for decoding the separated audio signal; an audio processor 106, amplifier 107, and speaker 108 for generating an audible audio output by processing the decoded audio signal; a video decoder 109 for decoding the separated video signal; a video display processor 110 for processing the video signal to be displayed by a display module 111; a personal video recording (PVR) unit 112 for storing a broadcast signal (or data stream) received by the television receiver; a system controller 113 for controlling the operation of the television receiver including the above-described elements; a system memory 114 for storing information under a control of the system controller; a counter 115 for determining a reproduction count of a selected stream using input and output information of the selected stream as reproduced by the PVR unit according to a control of the system controller and outputs the reproduction count to the system controller; a key signal input unit 116, such as a remote controller or a local keypad, for inputting to the system controller a key signal as determined by a user; a flag setting unit 117 for setting a flag in at least one unused field within a transport stream constructed of a plurality of packets according to a user selection made via the key signal input unit, the set flag including information indicating the previous reproduction stop point and being specifically located in a header of a corresponding packet; and an OSD generator 118 for generating on-screen display (OSD) information under a control of the system controller.

In the television receiver according to the present embodiment, the received broadcast signal is stored in the PVR unit 112 using the system controller 113. The received signal may be a digital broadcast signal, an analog broadcast signal encoded by the A/D converter 102, or other digital video input to the television receiver. In any case, the signal stored in the PVR unit 112 is configured in a transport stream format and is constructed of a plurality of transport packets each having a header and a payload. Thus, the PVR unit 112 records and reproduces the transport stream and includes a PVR controller 112a for controlling the recording and reproduction of the transport stream and a PVR storage medium 112b for storing and outputting the transport stream under a control of the PVR controller.

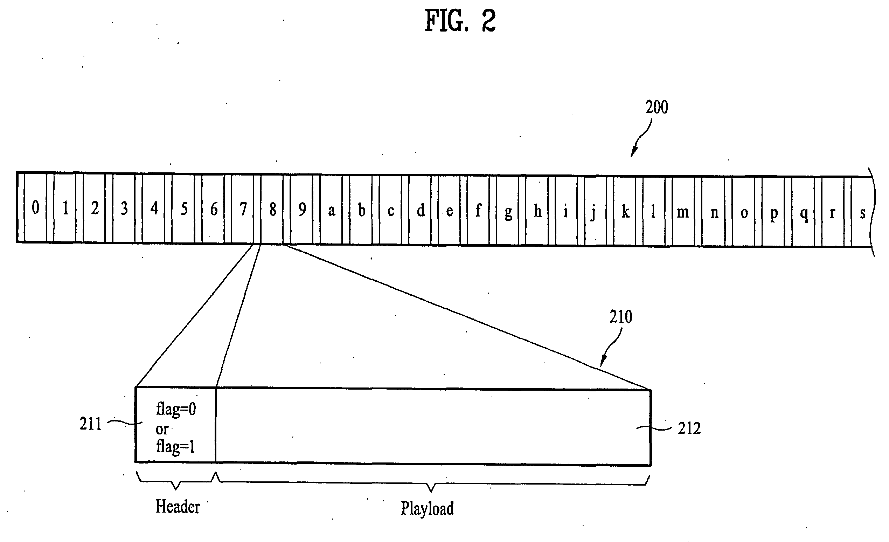

FIG. 2 illustrates an exemplary transport stream as stored in the PVR unit 112. Here, a transport stream 200 is constructed of a plurality of transport packets 210 each of which includes one header 211 and one payload 212. Control information and the like are loaded on the header 211, and data such as audio data and video data is loaded on the payload 212. At least one such transport stream is stored in the PVR storage medium 112.

Returning to FIG. 1, the system memory 114 stores, in addition to various execution programs for operating the television receiver, a timetable (e.g., Table 1) made up of a set of start and stop times for a previous reproduction of a transport stream as recorded or reproduced by the PVR unit 112. Each of the PVR storage medium 112 and the system memory 114 may be comprised of any one of a RAM memory device, EEPROM memory device, or hard disc drive. Generally speaking, however, the PVR storage medium 112 requires the greater storage capacity.

**Table 1**

| File name | Item | Start time | Stop time |
|---|---|---|---|
| F1 | 1 | 10:21:45 | 11:30:21 |
| | 2 | 12:21:45 | 13:10:03 |
| | 3 | 15:21:45 | 16:21:45 |
| | 4 | 15:21:45 | 16:21:45 |
| F2 | 1 | 22:10:12 | 00:57:10 |
| | 2 | 22:10:12 | 00:57:10 |

Upon input of a user command signal for reproducing a specific transport stream as stored in the PVR unit 112, the system controller 113 reads the selection, and determines the presence of a previous reproduction stop point according to the flag information set in the header of one of the packets configuring the selected stream. If such a flag is detected in the selected stream, the system controller 113 causes a reproduction of the stream from the corresponding (previous) stop point. Thereafter, i.e., during the selected reproduction, an input of a reproduction stop command by the user causes the system controller 113 to control the flag setting unit 117 to set flag information indicating the reproduction stop point. Thus, upon terminating the selected reproduction, the set flag is located in a header of a packet among the transport packets reproduced by the PVR unit 112, which is the packet corresponding to the reproduction stop point. Specifically, the flag is set in one unused field that is reserved within the header of the corresponding packet. The flag information is preferably one bit in length, and is thus set to one of a logic "1" or a logic "0" (see FIG. 2), but may be comprised of two or more bits. For example, if the flag information is set to "1" in the header 211 of each transport packet 210 of the selected stream having no identified reproduction stop point, the setting of a reproduction stop point sets to "0" the flag of the corresponding packet, which may be the start point of a subsequent instance of reproduction.

That is, the PVR unit 112, which records in the PVR storage medium 114 a received video input signal in a format of the transport stream 200 according to a control of the system controller 113, responds to a reproduction command for selecting a specific data stream stored the PVR storage medium 112b and thus reproduces the selected stream, starting from the payload 212 of a transport packet 210 having a flag indicating a previous reproduction stop point set in its header 211. The reproduction command is input by a user via the key signal input unit 116 and system controller 113, and upon its input, the system controller 113 searches the headers 211 of the transport packets 210 for the packet having the flag information for the previous reproduction stop point. The system controller 113 then reproduces the stream from the identified (flagged) transport packet. Thus, the system controller 113 may reproduce a transport stream either from an initial start point or a specific point of reproduction according to a prior designation by the user, using the flag information and the previously stored timetable.

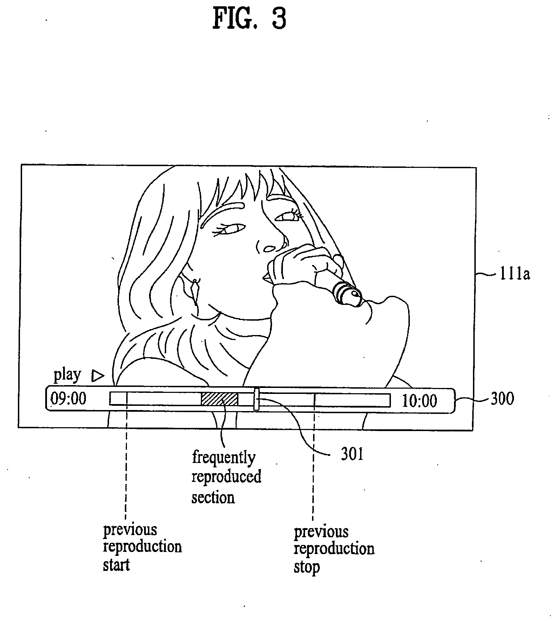

As shown in FIG. 3, the system controller 113 generates via the OSD generator 118 a progress bar 300, which represents an instance of reproduction (playback progress) according to the stored timetable and the stream's reproduction count, and the progress bar is displayed on a screen 111 a of the display module 111. The progress bar 300 represents an already reproduced reproduction section within an overall reproduction and may use contrasting colors or color densities to distinguish this section as well as a frequently reproduced section as determined by the counter 115. In addition, a position indicator 301 indicates a current point of reproduction within the progress of the overall reproduction and enables a user to selectively reproduce the stream, at any time during its reproduction, by moving the position indicator along the progress bar 300 using the key signal input unit 116, for example, to repeat an entire viewing, to view again some preferred reproduction section, to simulate a "rewind" function for viewing a missed portion, to skip ahead in the stream by simulating a "fast forward" function, or to confirm the reproduction count of the reproduced stream or a previous setting of a flag. These operations are facilitated by the contrasting (distinguishing) display of the progress bar 300. Therefore a reproduction stop point can be selectively determined by a user-specified movement of the position indicator 301 made in conjunction with a reference to the timetable, to thereby set the flag at a corresponding packet as desired.

In the operation of the television receiver according to the present invention, the system controller 113 sets the PVR unit 112 to a reproduction mode in response to a command signal for reproducing a transport stream stored in the PVR storage medium 112b input by a user via the key input signal unit 116. In the reproduction mode, the system controller 113 searches the flag information recorded in the headers 211 of the plurality of transport packets 210 configuring the transport stream and determines the presence or absence of a transport packet in which flag information indicating the stop point of a previous reproduction section is set. If there is no such flag information found by the search, the system controller 112 controls the PVR unit 112 to reproduce the stream from the initial transport packet 210 configuring the transport stream 200 and otherwise releases the setting of the flag and thereafter controls the PVR unit 112 to reproduce the stream from the packet in which the flag information was set. In either case, the controller 113 simultaneously displays the progress bar 300, which indicates a reproduction repetition count and a previous reproduction section of the stream being output (reproduced) by the PVR unit 113.

Upon detection of a reproduction stop command signal input, the system controller 113 may set, or reset, a flag indicating a reproduction stop point in an unused field within the header 211 of the transport packet 210 being reproduced at the time of inputting the reproduction stop command, which will be the first packet reproduced by a subsequent selection to reproduce the same stream. The flag information may, however, be optionally set in a predetermined earlier packet, so that some overlapping playback may be performed. This option may be provided by the television receiver manufacturer. The input of a reproduction stop command also causes the system controller 113 to receive from the PVR unit 112 the reproduction start point and the reproduction stop point of the reproduced stream. The system controller 113 then correlates the reproduction start and stop points to the stream provided by the PVR unit 112 and updates the timetable accordingly.

Thereafter, the user may request the previous reproduction timetable via an OSD menu, in which case the OSD generator 118 generates the updated timetable, in which reproduction start and stop points of previous reproduction sections are recorded. The user can select a specific start point from the timetable. Therefore, the system controller 113 enables a selective reproduction of the stream, for example, from the previous reproduction start point or from the previous reproduction stop point.

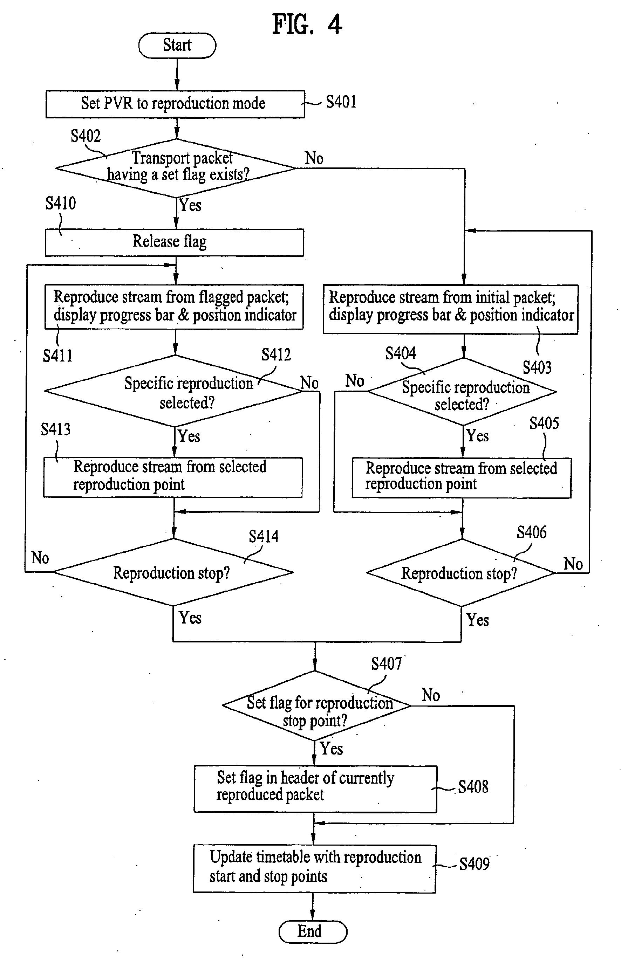

FIG. 4 illustrates a method of reproducing a transport stream, e.g., a broadcast signal that has been stored using a personal video recorder in which a command signal for reproducing a specific (selected) broadcast signal or stored stream configured in a transport packet format is first input by a user via the key signal input unit 116. In doing so, the system controller 113 sets the PVR unit 112 to a reproduction mode, so that the selected stream can be reproduced (S401). With the PVR unit 112 in the reproduction mode, the system controller 113 determines whether the selected stream contains a transport packet whose header has flag information indicating a previous reproduction stop point (S402). If there is no such flag information present, the transport stream is reproduced starting from an initial transport packet of the stored stream. Simultaneously, the system controller 113 creates a progress bar 300 via the OSD generator 118 using the timetable for previous reproduction sections of the corresponding stream stored in the system memory 114 and the reproduction count provided to the system controller, and the progress bar is displayed, for example, as in FIG. 3 (S403). The displayed progress bar represents the previous reproduction section, i.e., a section between reproduction start and stop points, and has a movable position indicator 301, enabling a user selection of a specific point of reproduction in the previous reproduction section; if the user makes such a selection (S404), the system controller 113 controls the PVR 112 to reproduce the stored stream from the selected point of reproduction (S405). As the specific reproduction selection proceeds ― or, if there was no such selection made, as the original selection proceeds ― it is determined whether a reproduction stop command is input via the key signal input unit 116 while the stream is reproduced (S406). If so, that is, upon detecting a reproduction stop command input, the system controller 113 determines whether there is an input of a flag setting command, which is a command for setting a flag indicating a reproduction stop point (S407). If a flag setting command is input, the system controller 113 sets the flag via the flag setting unit 117 so that the flag is located in a header of a transport packet corresponding to the command signal input time (S408). Then, upon termination of the selected reproduction, the system controller 113 updates the timetable by storing in the system memory 114 the start point of the reproduction section in a format of the timetable, such that the reproduction start point is stored in correlation with the reproduction stop point (S409).

On the other hand, if flag information is present in a corresponding transport stream, that is, if a flag indicating a stop point of the previous reproduction section is detected in a transport packet, the system controller 113 recognizes the flagged transport packet as the final packet of the stream previously viewed by the user. In other words, it is determined that a previous instance of reproduction has occurred for the selected stream and that the user wished to remember the point where viewing was left off. In this case, the set flag is released, e.g., set to "1" (S410). The transport stream is then reproduced from the recognized final transport packet of the previous reproduction section, and while thus reproducing the stream, the system controller 113 executes steps in correspondence to the steps S403~S406. That is, an analogous process is followed, to reproduce the streams as selected, while enabling a more specific selection of reproduction, which proceeds until it is similarly determined whether a reproduction stop command is input via the key signal input unit 116 while the stream is reproduced (S411~S414).

By adopting the method of the present invention, by setting, at the time of stopping an instance of reproduction, a flag indicating a reproduction stop point in a header of a corresponding packet of a previously reproduced transport stream, the same stream can later be automatically reproduced from the transport packet having the set flag. In addition, by storing reproduction start and stop points corresponding to a reproduction section in a timetable format, a wide selection of specific reproduction start points are provided for a subsequent instance of selecting a reproduction of stored transport streams. Therefore, through an on-screen display of a progress bar, which can confirm each previous reproduction section and each reproduction count using the stored timetable and a reproduction count, a section preferred by a user can be easily recognized and a specific reproduction start point can be easily selected.

It will be apparent to those skilled in the art that various modifications can be made in the present invention without departing from the scope of the invention. Thus, it is intended that the present invention covers such modifications provided they come within the scope of the appended claims.

## Claims

1. A television receiver, comprising:
a personal video recorder arranged to store at least one previous reproduction section of the transport stream constructed of a plurality of transport packets and to selectively reproduce the stored transport stream;
a flag setting unit arranged to set a flag in one of the plurality of transport packets, the set flag containing information indicating a stop point of a previous reproduction section of the stored transport stream; and
a system controller arranged to control said personal video recorder to reproduce the transport stream according to the flag information.

2. The television receiver as claimed in claim 1, comprising means to reproduce the transport stream from the transport packet in which the flag is set.

3. The television receiver as claimed in claim 1 or 2, comprising means to cause said system controller to display the previous reproduction section to enable a user selection of a specific reproduction point.

4. The television receiver as claimed in any preceding claim, further comprising:
a counter arranged to determine a reproduction count of the reproduced transport stream and to output the reproduction count to said system controller; and
an on-screen display generator arranged to generate a progress bar indicating the previous reproduction section and the reproduction count, the progress bar having a position indicator indicating a point of reproduction.

5. The television receiver as claimed in claim 4, wherein the progress bar is arranged to distinguish between a reproduced section of the transport stream and an overall reproduction of the transport stream.

6. The television receiver as claimed in claim 5, wherein the distinguishing of the progress bar is arranged to be made according to the reproduction count.

7. The television receiver as claimed in any preceding claim, comprising means to set the flag in an unused field within a header of a transport packet corresponding to an input to said system controller of a reproduction stop command.

8. The television receiver as claimed in any preceding claim, wherein the flag information is one bit in length.

9. The television receiver as claimed in any preceding claim, in which said personal video recorder (PVR) comprises:
a PVR storage medium arranged to store the transport stream; and
a PVR controller arranged to control the transport stream to be stored in said PVR storage medium and to be output from said PVR storage medium.

10. The television receiver as claimed in claim 9, wherein said PVR storage medium comprises one selected from the group consisting of a RAM memory device, an EEPROM memory device, and a hard disc drive.

11. The television receiver as claimed in any preceding claim, comprising means to store the at least one previous reproduction section in a system memory in a timetable format expressing a reproduction start point and reproduction stop point corresponding to each stored section.

12. The television receiver as claimed in any preceding claim, wherein the transport packet in which the flag is set corresponds to a stop point of the previous reproduction section.

13. A method of reproducing a transport stream in a television receiver including a personal video recorder, the method comprising:
determining, in response to a user selection of a reproduction of a transport stream constructed of a plurality of packets stored by the personal video recorder, whether a flag containing information indicating a stop point of a previous reproduction section of the stored transport stream is present in one of the plurality of transport packets;
reproducing the transport stream according to the presence of the flag; and
displaying a progress bar indicating the previous reproduction section and a current reproduction position while the transport stream is reproduced.

14. The method as claimed in claim 13, wherein the current reproduction position is represented by a position indicator enabling a user selection of a specific reproduction point.

15. The method as claimed in claim 14, further comprising:
determining whether a user selects a specific reproduction point from the displayed previous reproduction section; and
reproducing, if the user selects a specific reproduction point, the transport stream from the specific reproduction point.

16. The method as claimed in claim 13, wherein, if it is determined that there is no flag present, the transport stream is reproduced from an initial transport packet of the transport stream and wherein, if it is determined that there is a flag present, the transport stream is reproduced from a corresponding transport packet.

17. The method as claimed in claim 13, further comprising:
searching the plurality of transport packets to determined the presence of a flag.

18. The method as claimed in claim 13, wherein the flag is set in an unused field within a header of a transport packet corresponding to an input of a reproduction stop command.

19. The method as claimed in claim 13, wherein the flag information is one bit in length.

20. The method as claimed in claim 13, further comprising:
setting, if a reproduction stop command is input by the user while the transport stream is reproduced, a flag in a transport packet corresponding to a reproduction stop point, the set flag indicating the reproduction stop point of the previous reproduction section.

21. The method as claimed in claim 20, wherein the transport packet in which the flag is set corresponds to a stop point of the previous reproduction section.

22. The method as claimed in claim 13, further comprising:
storing in a system memory, if a reproduction stop command is input by the user while the transport stream is reproduced, information indicative of at least one reproduction section.

23. The method as claimed in claim 22, wherein the reproduction section information includes a reproduction start point and a reproduction stop point stored in a timetable format.

24. The method as claimed in claim 13, further comprising:
determining a reproduction count of the transport stream; and
displaying a progress bar indicating the previous reproduction section and the reproduction count, the progress bar having a position indicator indicating a point of reproduction.

25. The method as claimed in claim 24, wherein the progress bar distinguishes between a reproduced section of the transport stream and an overall reproduction of the transport stream and wherein the distinguishing of the progress bar is made according to the reproduction count.

26. The method as claimed in any of claims 13 to 25, wherein the transport stream is stored in a PVR storage medium of the personal video recorder and wherein the PVR storage medium comprises one selected from the group consisting of a RAM memory device, an EEPROM memory device, and a hard disc drive.
